# EUROPÄISCHE PATENTSCHRIFT

(11) **EP 0 548 780 B1**
(45) Veröffentlichungstag und Bekanntmachung des Hinweises auf die Patenterteilung: **30.08.1995**
(21) Anmeldenummer: 92121413.6
(22) Anmeldetag: 16.12.1992
(51) Int. Cl.: H01G 2/14

(54) **Elektrischer Kondensator**
Electrical capacitor
Condensateur électrique

(30) Priorität: 20.12.1991 DE 9115857 U
(43) Veröffentlichungstag der Anmeldung: 30.06.1993
(73) Patentinhaber: SIEMENS MATSUSHITA COMPONENTS GmbH & CO KG, 81541 München (DE)
(72) Erfinder: Stelzl, Gerhard, Dipl.-Ing. (FH), W-7920 Heidenheim (DE)
(74) Vertreter: Fuchs, Franz-Josef, Dr.-Ing.

(56) Entgegenhaltungen:
- WO-A-87/07780
- FR-A- 2 428 311

## Beschreibung

Die Erfindung betrifft einen elektrischen Kondensator, der in ein Gehäuse eingebaut ist und eine Überdruckabreißsicherung besitzt, die an einem nach innen gewölbten Blech-Deckel- oder -Bodeneinsatz des Gehäuses befestigt ist.

Ein derartiger Kondensator ist aus der DE 28 25 453 A1 bekannt. Dort ist der Gehäuseeinsatz als Arbeitmembran in Form einer kugelförmigen, nach innen gewölbten Schale ausgebildet. Bei Überdruck im Gehäuseinneren, der durch Selbstheilprozesse im Kondensatorwickel bzw. durch Zersetzung eines flüssigen Imprägniermittels bei Spannungsdurchschlägen aufgebaut wird, erfolgt beim bekannten Kondensator ein undefiniertes Ausbeulen des Gehäuseeinsatzes. Beim Abriß der Überdrucksicherung (Abschaltung) und folgender Innendruckentlastung kann der Einsatz wieder zurückspringen und eine Wiedereinschaltung des Draht-Abreiß-Sicherungssystems nicht ausgeschlossen werden.

Ferner ist aus der WO 87/07780 ein Kondensator bekannt, der in ein Gehäuse mit Deckel eingebaut ist, wobei der Deckel bei Innendruck im Gehäuse nach außen springt und eine im Kondensatorgehäuse angeordnete Abreißsicherung betätigt. Bei dieser Ausführung bestehen jedoch im Gegensatz zum eingangsgenannten Stand der Technik Gehäuse und Deckel aus Kunststoff, was andere Fertigungstechnologien bedingt.

Aufgabe der Erfindung ist es daher, einen elektrischen Kondensator der eingangsgenannten Art derart weiterzubilden, daß eine definierte Abschalt-Stellung gewährleistet und eine Wiedereinschaltung nach Ansprechen der Abreißsicherung verhindert wird.

Diese Aufgabe wird erfindungsgemäß dadurch gelöst, daß der Einsatz eine Vorbiegung aufweist, deren Größe 2 bis 15 mm beträgt, daß auf der Außenseite des Einsatzes am Anfang der Vorbiegung eine Spaltprägung angeordnet ist, daß der Einsatz zusätzlich auf der Innenseite eine Spaltprägung besitzt, die am Ende der Vorbiegung angeordnet ist, und daß die Spaltprägung einen Öffnungswinkel von 10 bis 60° besitzt und eine Tiefe von 30 bis 60 % der Blechstärke des Einsatzes aufweist.

Die Erfindung wird anhand des folgenden Ausführungsbeispiels erläutert.

In der dazugehörenden Zeichnung zeigen

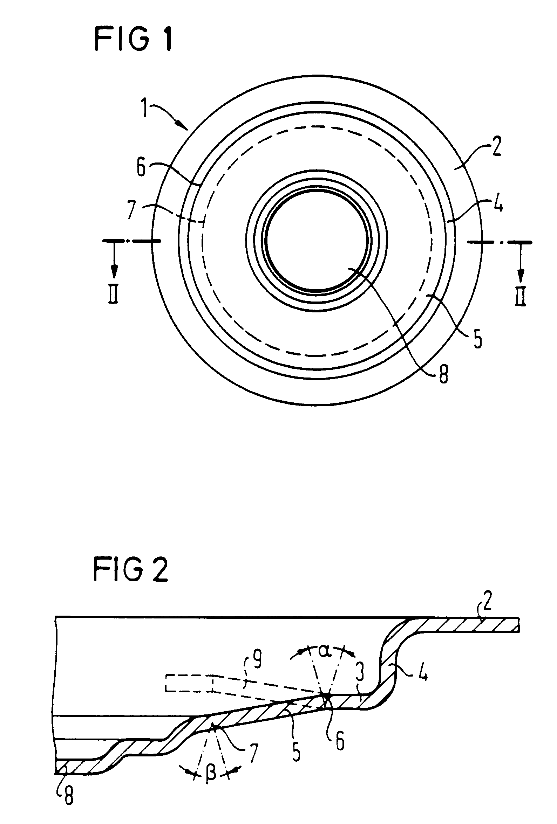

FIG 1 die Aufsicht auf einen Gehäuseeinsatz und FIG 2 ein vergrößertes Schnittbild in Teilansicht des Gehäuseeinsatzes nach FIG 1.

Der Einsatz weist zunächst einen ebenen Bereich 2 auf, der außen angeordnet ist und in dem der Einsatz 1 mit dem in den Figuren nicht dargestellten Kondensatorgehäuse verbunden ist.

Daran schließt sich ein ins Innere des Gehäuses gerichteter Abschnitt 4 und ein weiterer Bereich 3 an, der im wesentlichen in der gleichen Ebene wie der Bereich 2 angeordnet ist.

An den Bereich 3 schließt sich der Bereich 5 der Vorbiegung an, der ebenfalls ins Innere des Kondensatorgehäuses gerichtet ist.

Auf der Außenseite besitzt der Einsatz 1 eine Spaltprägung 6, die am Beginn der Vorbiegung 5 angeordnet ist. Am Ende der Vorbiegung 5 ist auf der Innenseite des Einsatzes 1 eine weitere Spaltprägung 7 angeordnet.

Die Spaltprägungen 6 und 7 besitzen Öffnungswinkel α , β von 10 bis 60° und eine Tiefe von 30 bis 60 % der Blechstärke des Einsatzes 1.

Im Inneren des Einsatzes 1 ist eine Fläche 8 angeordnet, an der die Abschaltsicherung befestigt ist.

Durch die Außen- und Innenspaltprägungen 6 und 7 ergibt sich eine Scharnierfunktion, die gleichzeitig mit der konkaven Ausgangsposition der Vorbiegung 5 bei Aufbau eines Innendrucks und Abriß der Drahtsicherung den Einsatz 1 definiert in eine konvexe Stellung 9 nach außen springen lassen in der der Einsatz 1 verbleibt, so daß eine Wiedereinschaltung der Überdrucksicherung ausgeschlossen ist.

Der Gehäuseeinsatz 1 wirkt somit als Schnappdeckel oder -Boden eines Kondensatorgehäuses.

## Patentansprüche

1. Elektrischer Kondensator, der in ein Gehäuse eingebaut ist und eine Überdruckabreißsicherung besitzt, die an einem nach innen gewölbten Blech-Deckel- oder Bodeneinsatz des Gehäuses befestigt ist,
**dadurch gekennzeichnet**,
daß der Einsatz (1) eine Vorbiegung (5) aufweist, deren Größe 2 bis 15 mm beträgt, daß auf der Außenseite des Einsatzes (1) am Anfang der Vorbiegung (5) eine Spaltprägung (6) angeordnet ist, daß der Einsatz (1) zusätzlich auf der Innenseite eine Spaltprägung (7) beisitzt, die am Ende der Vorbiegung (5) angeordnet ist, und daß die Spaltprägung (6, 7) einen Öffnungswinkel (α, β) von 10 bis 60° besitzt und eine Tiefe von 30 bis 60 % der Blechstärke des Einsatzes (1) aufweist.

## Claims

1. Electrical capacitor which is installed in a housing and has an overpressure tear-off safety device which is mounted on an inwardly domed sheet-metal cover insert or base insert of the housing, characterized in that the insert (1) has a prebent region (5) whose magnitude is 2 to 15 mm, in that an indented gap (6) is arranged on the outside of the insert (1) at the start of the prebent region (5), in that the insert (1) additionally has an indented gap (7), which is arranged at the end of the prebent region (5), on the inside, and in that the indented gap (6, 7) has a vertex angle (α, β) of 10 to 60° and a depth of 30 to 60% of the sheet-metal thickness of the insert (1).

## Revendications

1. Condensateur électrique, qui est monté dans un boîtier et possède un élément de sécurité apte à se rompre en cas de surpression, qui est fixé à un insert en tôle de plafond ou de fond, cintré vers l'intérieur, du boîtier, caractérisé par le fait
que l'insert (1) comporte une partie précoudée (5), dont la taille est comprise entre 2 et 15 mm, qu'un estampage en forme de fente (6) est prévu sur la face extérieure de l'insert (1), au début de la partie précoudée (5), que l'insert (1) possède en outre, sur sa face intérieure, une partie estampée en forme de fente (7), qui est disposée sur l'extrémité de la partie précoudée (5), et que la partie estampée en forme de fente (6,7) possède un angle d'ouverture (α, β) de 10 à 60° et une profondeur de 30 à 60 % de l'épaisseur de la tôle de l'insert (1).
